# EUROPÄISCHE PATENTSCHRIFT

(11) **EP 3 449 715 B1**
(45) Veröffentlichungstag und Bekanntmachung des Hinweises auf die Patenterteilung: **04.11.2020**
(21) Anmeldenummer: 18174879.9
(22) Anmeldetag: 29.05.2018
(51) Int. Cl.: A01D 67/00, B62D 55/112, B62D 55/116, B62D 55/02, A01D 43/08

(54) **LANDWIRTSCHAFTLICHES FAHRZEUG SOWIE RAUPENFAHRWERK FÜR EIN LANDWIRTSCHAFTLICHES FAHRZEUG**
AGRICULTURAL VEHICLE AND TRACKED UNDERCARRIAGE FOR AN AGRICULTURAL VEHICLE
VÉHICULE AGRICOLE AINSI QUE CHENILLE POUR UN VÉHICULE AGRICOLE

(30) Priorität: 29.08.2017 DE 102017119791
(43) Veröffentlichungstag der Anmeldung: 06.03.2019
(73) Patentinhaber: CLAAS Selbstfahrende Erntemaschinen GmbH, 33428 Harsewinkel (DE)
(72) Erfinder: Silies, Andreas, 48488 Emsbüren (DE); Behra, Jan-Philipp, 33332 Gütersloh (DE); Isfort, Heinrich, 48249 Dülmen (DE)
(74) Vertreter: CLAAS Gruppe

(56) Entgegenhaltungen:
- EP-B1- 1 840 018
- WO-A1-2016/049760
- CA-A1- 2 677 421
- DE-T2- 69 719 492
- JP-A- 2015 209 137

## Beschreibung

Die vorliegende Anmeldung betrifft ein landwirtschaftliches Fahrzeug, insbesondere einen Feldhäcksler, mit zwei beidseitig des Fahrzeugs angeordneten Raupenlaufwerken, die an gegenüberliegenden Enden einer Vorderachse des Fahrzeugs jeweils mit dem Fahrzeug zusammenwirken.

Weiterhin betrifft die vorliegende Anmeldung ein Raupenlaufwerk für ein landwirtschaftliches Fahrzeug, insbesondere für einen Feldhäcksler.

Landwirtschaftliche Fahrzeuge und Raupenlaufwerke sind im Stand der Technik bereits weitläufig bekannt. Hierzu wird insbesondere auf die EP 1 840 018 B1 verwiesen, die ein Raupenlaufwerk betrifft. Diese Schrift befasst sich mit einer geeigneten Lagerung des bzw. der Hilfsräder, um der oben beschriebenen Problematik zur Herstellung eines möglichst vollflächigen Kontakts zwischen unterem Abschnitt des Laufgurts und dem Untergrund sicherstellen zu können. Die Dokumente WO 2016/049760 A1, DE 697 19 492 T2, CA 2 677 421 A1 und JP 2015 209137 A betreffen bekannte Raupenlaufwerke für landwirtschaftliche Fahrzeuge.

Laufwerke werden typischerweise an besonders großen und schweren landwirtschaftlichen Fahrzeugen verwendet, insbesondere an Mähdreschern. Mähdrescher weisen eine außerordentlich große Masse auf, sodass der Hauptvorteil der Verwendung von Raupenlaufwerken zum Tragen kommt, nämlich die Reduktion der Flächenpressung und die damit einhergehende Schonung des Untergrundes sowie die Einsetzbarkeit des jeweiligen Fahrzeugs auch auf weniger tragfähigem, beispielsweise sumpfigem, Boden. Die hohe Masse eines Mähdreschers, mit vollem Korntank durchaus im Bereich von 30 Tonnen, hat dabei zur Folge, dass die Raupenlaufwerke gewissermaßen als "Walze" wirken. Das heißt, dass Unebenheiten des jeweils befahrenen Untergrundes geradezu eingeebnet werden. Verschwenkungen der Raupenlaufwerke um ihre Schwenkachse relativ zum Fahrzeug finden daraufhin lediglich innerhalb eines kleinen Schwenkwinkelbereichs von typischerweise weniger als ±10° gegenüber einer Nulllage statt. Weiterhin werden Mähdrescher typischerweise unter hochsommerlichen Witterungsbedingungen eingesetzt. Die zu bearbeitenden Felder sind entsprechend trocken und tragfähig.

Allerdings ist die Verwendung von Raupenlaufwerken grundsätzlich auch für leichtere landwirtschaftliche Fahrzeuge interessant und auch bereits bekannt, insbesondere für Feldhäcksler. Diese weisen gegenüber einem Mähdrescher eine deutlich geringere Masse auf, insbesondere fehlt es an einem Korntank. Dies hat zur Folge, dass die Raupenlaufwerke deutlich ausgeprägter einem womöglich unebenen Terrain folgen und selbiges nicht in der vorstehend beschriebenen Weise mittels hohen Eigengewichts egalisieren. Außerdem werden Feldhäcksler vielfach unter vergleichsweise schlechten Witterungsbedingungen eingesetzt, beispielsweise im Herbst. Der dann oftmals durchnässte Untergrund ist nicht unbedingt tragfähig, sodass es zu einem Einsinken des Erntefahrzeugs kommen kann. Im Zuge des Einsinkens eines Raupenlaufwerks verdreht sich dieses typischerweise relativ zu dem Erntefahrzeug und läuft Gefahr, an das Gehäuse anzuschlagen und andere Schäden zu verursachen. Insbesondere kann die für den Antrieb des Raupenlaufwerks verantwortliche Gelenkwell abreißen.

Mithin ist es Aufgabe der vorliegenden Anmeldung, ein landwirtschaftliches Fahrzeug bereitzustellen, bei dem ein Beschädigungsrisiko der beschriebenen Art zumindest verringert, vorzugsweise vollständig vermieden, ist.

Die zugrunde liegende Aufgabe wird erfindungsgemäß durch ein landwirtschaftliches Fahrzeug mit den Merkmalen des Anspruchs 1 gelöst.

Das landwirtschaftliche Fahrzeug kann ohne Weiteres zusätzlich zu seiner Vorderachse auch an seiner Hinterachse mit Raupenlaufwerken ausgestattet sein. Eine Ausstattung mit selbigen zumindest an der Vorderachse ist gegenüber eine solchen optionalen Ausgestaltung jedoch zwingend.

Die "Haupträder" dienen dazu, das landwirtschaftliche Fahrzeug über dessen Vorderachse auf dem jeweiligen Untergrund zu lagern. Typischerweise ist mindestens eine der Haupträder eines jeden Raupenlaufwerks mit einem Antrieb des Fahrzeugs verbunden, sodass das Fahrzeug ein Drehmoment auf die jeweiligen Haupträder übertragen kann, wodurch letztlich der sich in Wirkverbindung mit den Haupträdern befindliche Laufgurt antreibbar ist.

Das mindestens eine "Hilfsrad", vorzugsweise umfasst jedes der Raupenlaufwerke eine Mehrzahl von Hilfsrädern, dient insbesondere der dauerhaften Herstellung eines möglichst vollflächigen Kontakts des unteren Abschnitts des Laufgurts mit dem Untergrund bzw. dessen Oberfläche. Mit anderen Worten hat das Hilfsrad gewissermaßen eine Niederhaltefunktion für den Laufgurt, wobei eine Lagerkräfte des Fahrzeugs typischerweise mittels einer Rahmenkonstruktion des jeweiligen Raupenlaufwerks auch mittels des bzw. der Hilfsräder auf den Untergrund übertragbar sind. Die Niederhaltefunktion kann vor allem dann von Bedeutung sein, wenn das Raupenlaufwerk eine Vertiefung überbrückt oder eine Erhöhung hinauffährt. Ohne Wirkung des Hilfsrads würde sich der Laufgurt auf annähernd direktem Weg zwischen den Haupträdern erstrecken, wobei der untere Abschnitt des Laufgurts den Kontakt zu dem Untergrund weitestgehend verlieren würde. Das Hilfsrad hilft dabei, ebendies zu vermeiden und hält den Laufgurt nieder, sodass letzterer durchgehend einen vollflächigen Kontakt mit dem Untergrund aufweist. Hierdurch wird die Aufstandsfläche des Fahrzeugs unabhängig vom Relief des Untergrundes dauerhaft auf einem Maximum gehalten, wodurch durch Gewichtskräfte des Fahrzeugs bedingte Flächenpressungen zwischen den Raupenlaufwerken und dem Untergrund wunschgemäß auf ein Minimum reduziert werden.

Die "Anlenkung" der Raupenlaufwerke an die Vorderachse des Fahrzeugs erfolgt derart, dass die Raupenlaufwerke um eine zur Vorderachse parallele Schwenkachse, die auch mit der Vorderachse zusammenfallen kann, verschwenken kann. Dies ist erforderlich, damit das Fahrzeug Unebenheiten des Untergrunds überfahren kann.

Der "Schwenkwinkelbereich" erstreckt sich beidseits einer Nulllage des Raupenlaufwerks, bei dessen Vorliegen eine Längsachse des Fahrzeugs zumindest im Wesentlichen parallel zu der Oberfläche des Untergrunds orientiert ist und im Zuge der Fortbewegung des Fahrzeugs auch bleibt. Dabei ist es nicht zwingend erforderlich, gleichwohl vorstellbar, dass der Schwenkwinkelbereich, der mittels des Begrenzungsmittels begrenzt ist, sich beidseitig der Nulllage um denselben Winkelbetrag erstreckt. Somit ist es beispielsweise denkbar, dass das Begrenzungsmittel eine Verschwenkung des Raupenlaufwerks gegenüber dessen Nulllage an dem Fahrzeug um 10° sowohl im Uhrzeigersinn als auch entgegen dem Uhrzeigersinn erlaubt. Ein solches Begrenzungsmittel würde demzufolge einen Schwenkwinkelbereich von ±10° begrenzen. Die Winkelbeträge von +10° und -10° beschreiben in diesem Beispiel die einander entgegengesetzten "Grenzschwenkwinkel" des Begrenzungsmittels.

Die Erfindung hat viele Vorteile. Insbesondere ist es mittels des Begrenzungsmittels verhindert, dass die Raupenlaufwerke völlig frei relativ zu dem Fahrzeug verschwenken können und im Zuge dessen unkontrolliert an dem Fahrzeug anschlagen können oder auf andere Weise Schäden anrichten. Hierdurch ist das vorstehend beschriebene Beschädigungsrisiko vermieden.

In einer vorteilhaften Ausgestaltung des erfindungsgemäßen Fahrzeugs umfasst das Begrenzungsmittel mindestens ein verdrehfest zumindest mittelbar an der Vorderachse des Fahrzeugs angeschlossenes Blockiermittel. Weiterhin umfasst das Begrenzungsmittels in dieser Ausgestaltung mindestens ein radial von der Schwenkachse beabstandetes, fest an dem Raupenlaufwerk angeordnetes Bewegungsmittel. Das Blockiermittel und das Bewegungsmittel wirken dabei derart zusammen, dass eine Bewegung des Bewegungsmittels relativ zu dem Blockiermittel über den Schwenkwinkelbereich hinaus mittels des Blockiermittels blockierbar oder blockiert ist. Insbesondere können das Blockiermittel und das Bewegungsmittel derart ausgebildet sein, dass sie dazu geeignet sind, gemeinsam einen Formschluss auszubilden.

Insbesondere kann das Blockiermittel derart ausgebildet sein, es mindestens zwei einander gegenüberliegende Anschläge umfasst, die gemeinsam den Schwenkwinkelbereich begrenzen. Bei einer solchen Ausgestaltung kann das Bewegungsmittel an den am Blockiermittel ausgebildeten Anschlägen anschlagen. Ein solcher Anschlag ermöglicht einen Kraftfluss zwischen dem Raupenlaufwerk und dem Fahrzeug, wobei die Kraft von dem Raupenlaufwerk durch das Bewegungsmittel über den jeweiligen Anschlag in das Blockiermittel und mittels des letzteren schließlich in das Fahrzeug abgeleitet wird. Hierbei überträgt das Blockiermittel ein Kräftepaar, das heißt ein Drehmoment, an das Fahrzeug. Hierdurch ist eine über den Schwenkwinkelbereich hinausgehende Verschwenkung des jeweiligen Raupenlaufwerks gegenüber dem Fahrzeug blockiert.

Bei der beschriebenen Ausgestaltung kann ein Bewegungsbereich zwischen den Anschlägen seitlich offen sein, sodass das Bewegungsmittel besonders einfach seitlich in diesen Bewegungsbereich einfahren kann. In einem fertig montierten Zustand des Raupenlaufwerks ist eine Relativbewegung von Blockiermittel und Bewegungsmittel zumindest insoweit verhindert, als das Bewegungsmittel aus dem Bewegungsbereich heraus bewegt werden kann. Mit anderen Worten ist es nicht möglich, dass das Bewegungsmittel derart relativ zu dem Blockiermittel bewegt wird, dass es im Zuge einer Verschwenkung des Raupenlaufwerks relativ zu dem Fahrzeug bei Erreichen eines jeweiligen Grenzschwenkwinkels einer Kollision mit dem zugehörigen Anschlag des Blockiermittels ausweicht und dadurch letztlich der Schwenkwinkelbereich verlassen wird.

In einer besonders vorteilhaften Ausgestaltung kann das Blockiermittel von einer Anschlagplatte gebildet sein, deren Plattenebene senkrecht zu der Schwenkachse orientiert ist. Die Anschlagplatte kann insbesondere in Form einer Kreisplatte ausgebildet sein. Sie ist in drehfester Weis mittelbar oder unmittelbar mit dem Fahrzeug verbunden, insbesondere mit der Vorderachse desselben.

Bei einer solchen Ausgestaltung des Blockiermittels in Form einer Anschlagplatte können sich die Anschläge beispielsweise radial ausgehend von einem äußeren Rand der Anschlagplatte erstrecken, sodass sie zwischen sich den Schwenkwinkelbereich begrenzen. Der zwischen den Anschlagen vorliegende Bewegungsbereich, innerhalb dessen sich das Bewegungsmittel bewegen kann, ist bei einer solchen Ausgestaltung gewissermaßen nach oben und unten mittels der Anschläge und zu der Anschlagplatte hin mittels dessen äußeren Rands blockiert. Die gegenüberliegende Seite kann insbesondere offen ausgebildet sein.

Alternativ zu sich radial über die Anschlagplatte hinaus erstreckenden Anschlägen ist es ebenso denkbar, dass die Anschlagplatte einen radial nach innen gerichteten Rücksprung aufweist, der sich über den Schwenkwinkelbereich erstreckt. Die Anschläge sind bei einer solchen Ausgestaltung gewissermaßen in Form der endseitigen Rücksprungflanken ausgebildet.

Unabhängig von der konkreten Ausgestaltung des Blockiermittels kann es von besonderem Vorteil sein, wenn das Bewegungsmittel einen Zapfen umfasst, insbesondere in Form eines Zylinders, der in den von dem Blockiermittel begrenzten Schwenkwinkelbereich hineinragt. Dieser Zapfen schlägt sodann im Zuge der Verschwenkung des zugehörigen Raupenlaufwerks relativ zu dem übrigen Fahrzeug sowie bei Erreichen eines Endes des Schwenkwinkelbereichs an dem Blockiermittel an, sodass eine weitergehende Verschwenkung des Raupenlaufwerks erfindungsgemäß unterbunden ist.

Gemäß dem Gegenstand des Anspruchs 1 umfasst das Begrenzungsmittel mindestens ein Dämpfungselement, mittels dem eine Anschlagkraft, die im Moment eines Anschlags miteinander zusammenwirkender Komponenten des Begrenzungsmittels auftritt, dämpfbar ist. Auf diese Weise kann vermieden werden, dass das Begrenzungsmittel als solches im Zuge einer schlagartigen oder ruckartigen Verschwenkung des Raupenlaufwerks und einem damit einhergehenden, entsprechend großen Energieeintrag in das Begrenzungsmittel Beschädigungen erleidet.

Insbesondere ist es denkbar ein solches Dämpfungselement von einer Kolben-Zylinder-Einheit zu bilden, wobei der Kolben innerhalb des Zylinders zwei Arbeitsräume voneinander trennt und mindestens eine strömungstechnische Verbindung mit einem vergleichsweise kleinen Querschnitt aufweist, sodass ein Arbeitsfluid im Zuge einer Bewegung des Kolbens in dem Zylinder lediglich in gedrosselter Weise von dem einen in den anderen Arbeitsraum überströmen kann. Letzteres bewirkt ein der Bewegung entgegen gerichtete Kraft, die letztlich die Dämpfung bewirkt.

Alternativ oder zusätzlich ist auch die Ausgestaltung einer Feder möglich. Auch kann eine Bremse vorgesehen werden, die beispielsweise mittels eines Reibschlusses eine Bewegung eines Bewegungsmittels zumindest in einem Grenzbereich kurz vor Erreichen eines jeweiligen Anschlags abbremst und somit einen "harten Anschlag" des Bewegungsmittels gegen den Anschlag vermeidet.

Sofern das Begrenzungsmittel in Form eines Blockiermittels sowie eines damit zusammenwirkenden Bewegungsmittels ausgebildet ist, kann es besonders vorteilhaft sein, das mindestens eine Dämpfungselement an dem Blockiermittel auszugestalten.

Weiterhin wird die zugrunde liegende Aufgabe erfindungsgemäß durch ein Raupenlaufwerk mit den Merkmalen des Anspruchs 7 gelöst.

Unter einem "Festabschnitt" an dem Raupenlaufwerk wird ein solcher Abschnitt desselben verstanden, der relativ zu dem Raupenlaufwerk um eine Schwenkachse verschwenkbar ist bzw. umgekehrt. Insbesondere kann der Festabschnitt von einem Koppelelement gebildet sein, mittels dessen das Raupenlaufwerk mit einem zugehörigen landwirtschaftlichen Fahrzeug, insbesondere einer Vorderachse eines solchen, koppelbar ist.

Ein derartig ausgebildetes Raupenlaufwerk ist besonders gut zur Ausbildung des erfindungsgemäßen landwirtschaftlichen Fahrzeugs geeignet. Die Vorteile, die mittels des erfindungsgemäßen Raupenlaufwerks erreichbar sind, sind identisch zu denen des erfindungsgemäßen Fahrzeugs. Insbesondere kann eine unkontrollierte Verschwenkung des Raupenlaufwerks infolge eines unebenen Untergrundes verhindert werden, wodurch wiederum Schäden an dem jeweils zugehörigen landwirtschaftlichen Fahrzeug vermeidbar sind.

Vorteilhafterweise umfasst das Begrenzungsmittel mindestens ein verdrehfest an dem Festabschnitt angeschlossenes Blockiermittel sowie mindestens ein radial von der Schwenkachse beabstandetes, fest an dem übrigen Raupenlaufwerk angeordnetes Bewegungsmittel, wobei das Bewegungsmittel und das Blockiermittel derart zusammenwirken, dass eine Bewegung des Bewegungsmittels relativ zu dem Blockiermittel über den Schwenkwinkelbereich hinaus mittels des Blockiermittels blockierbar ist. Die Vorteile einer solchen Ausgestaltung ergeben sich analog zu der vorstehenden Beschreibung im Zusammenhang mit dem erfindungsgemäßen Fahrzeug.

Weiterhin ist gemäß dem Gegenstand des Anspruchs 7 ein Raupenlaufwerk vorgesehen, bei dem das Begrenzungsmittel mindestens ein Dämpfungselement umfasst, mittels dem eine Anschlagkraft, die im Moment eines Anschlags miteinander zusammenwirkender Komponenten des Begrenzungsmittel auftritt, dämpfbar ist, sodass Beschädigungen des Begrenzungsmittels infolge des Anschlags vermeidbar sind.

Das erfindungsgemäße Fahrzeug sowie das erfindungsgemäße Raupenlaufwerk werden nachstehend anhand von Ausführungsbeispielen, die in den Figuren dargestellt sind, näher erläutert. Es zeigt:
- Fig. 1:: Eine Ansicht eines erfindungsgemäßen landwirtschaftlichen Fahrzeugs, das mit erfindungsgemäßen Raupenlaufwerken ausgestattet ist, wobei sich die Raupenlaufwerke jeweils in ihrer Nulllage befinden,
- Fig. 2:: Eine Ansicht des landwirtschaftlichen Fahrzeugs gemäß Figur 1, wobei die Raupenlaufwerke sich in einer gegenüber dem Fahrzeug verschwenkten Lage befinden,
- Fig. 3:: Eine perspektivische Ansicht des erfindungsgemäßen Raupenlaufwerks des erfindungsgemäßen Fahrzeugs gemäß Figur 1,
- Fig. 4:: Eine weitere perspektivische Ansicht des Raupenlaufwerks gemäß Figur 3,
- Fig. 5:: Eine perspektivische Ansicht einer Vorderachse des Fahrzeugs gemäß Figur 1 mitsamt einem an einer Anlenkstelle der Vorderachse angelenkten Raupenlaufwerk,
- Fig. 6:: Eine schematische Ansicht eines in einer Schwenklage befindlichen Raupenlaufwerks eines erfindungsgemäßen landwirtschaftlichen Fahrzeugs mit einem Dämpfungselement,
- Fig. 7:: Eine schematische Ansicht des Raupenlaufwerks gemäß Figur 6 bei Vorliegen in dessen Nulllage und
- Fig. 8:: Eine schematische Ansicht des Raupenlaufwerks gemäß Figur 6 bei Vorliegen in einer weiteren Schwenklage.

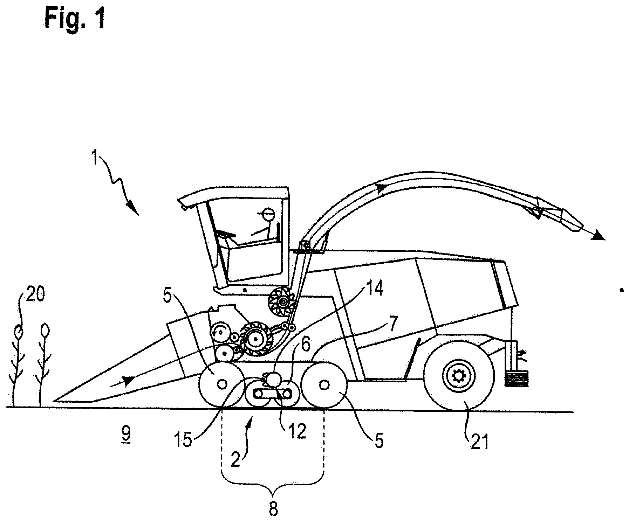

Das Ausführungsbeispiel, das in den **Figuren 1 bis 8** dargestellt ist, umfasst ein erfindungsgemäßes landwirtschaftliches Fahrzeug **1**, das hier von einem Feldhäcksler gebildet ist. Das Fahrzeug **1** wirkt an einer Vorderachse **4** beidseits jeweils mit einem erfindungsgemäßen Raupenlaufwerk **2** zusammen. An einer Hinterachse ist das Fahrzeug **1** wie üblich mit runden Hinterrädern **21** ausgestattet.

Die Raupenlaufwerke **2** umfassen jeweils zwei Haupträder **5** sowie zwei zwischen den Haupträdern **5** angeordnete Hilfsräder **6**. Weiterhin umfasst jedes der Raupenlaufwerke **2** einen Laufgurt **7,** der die Haupträder **5** umspannt und in einem unteren, einem Untergrund **9** zugewandten Abschnitt **8** mit den Hilfsrädern **6** zusammenwirkt.

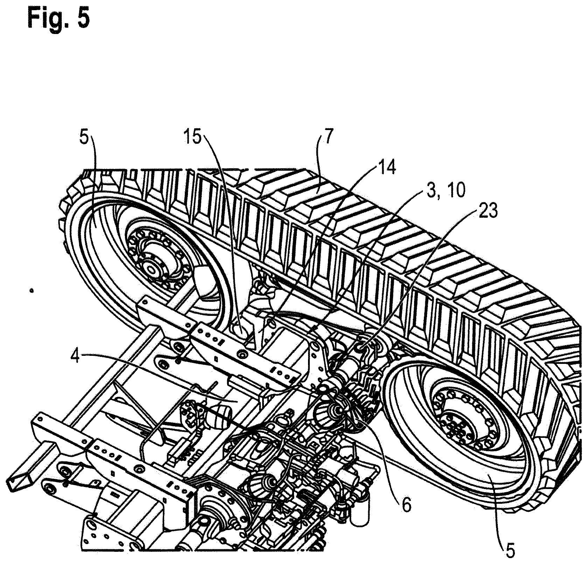

Wie sich insbesondere anhand der Darstellung gemäß **Figur 5** ergibt, sind die Raupenlaufwerke **2** jeweils an Anlenkstellen **10** der Vorderachse **4** angeordnet, die sich jeweils an einem zugehörigen Ende **3** der Vorderachse **4** befinden. Die Raupenlaufwerke **2** sind derart mit der Vorderachse **4** verbunden, dass ein Festabschnitt **19** eines jeweiligen Raupenlaufwerks **2** verdrehfest an der Vorderachse **4** befestigt ist. Der Festabschnitt **19** ist derart an dem zugehörigen Raupenlaufwerk **2** ausgebildet, dass das Raupenlaufwerk **2** im Übrigen relativ zu dem Festabschnitt **19** und mithin zu der Vorderachse **4** bzw. dem übrigen Fahrzeug **1** verschwenkbar ist. Diese Verschwenkung findet um eine Schwenkachse **11** statt, die in dem gezeigten Beispiel zumindest annähernd mit einer Längsachse der Vorderachse **4** zusammenfällt.

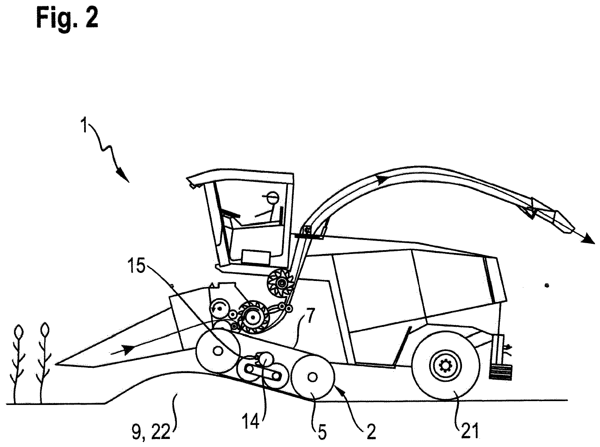

Die Verschwenkbarkeit der Raupenlaufwerke **2** ermöglicht es, dass das Fahrzeug **1** Unebenheiten wie beispielsweise eine in **Figur 2** qualitativ dargestellte Erhebung **22** des Untergrunds **9** überwinden kann, da die Raupenlaufwerke **2** einer Neigung des Untergrunds **9** folgen können. Eine verschwenkte Stellung der Raupenlaufwerke **2** relativ zu dem übrigen Fahrzeug **1** ergibt sich gleichermaßen aus **Figur 2****.**

Wie eingangs beschrieben, kann eine betragsmäßig zu große Verschwenkung eines Raupenlaufwerks **2** gegenüber dem zugehörigen landwirtschaftlichen Fahrzeug **1** zu einer Kollision beider Teile führen, die wiederum empfindliche Schäden nach sich ziehen kann. Ferner kann es vorkommen, dass andere Bauteile, die sowohl mit dem Fahrzeug **1** als auch mit einem jeweiligen Raupenlaufwerk **2** verbunden sind, einer zu ausgeprägte Relativbewegung bzw. Relativverschwenkung nicht folgen können und brechen oder abreißen. In dem gezeigten Beispiel betrifft dies unter anderem eine Gelenkwelle **23**, mittels derer ein Antriebsmoment von einem Antrieb des Fahrzeugs **1** auf die Haupträder **5** des Raupenlaufwerks **2** übertragen wird, sodass das Fahrzeug **1** mittels des Raupenlaufwerks **2** bewegbar ist.

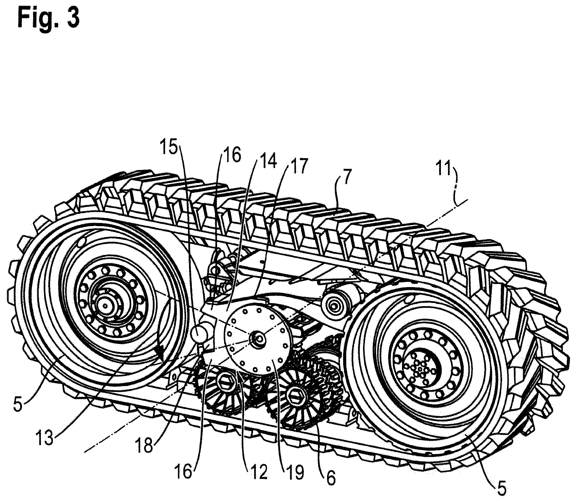

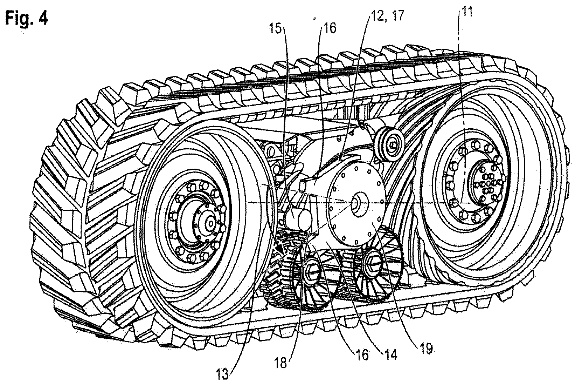

Um die beschriebenen Beschädigungen zu vermeiden, sind die Raupenlaufwerke **2** erfindungsgemäß jeweils mit einem Begrenzungsmittel **12** ausgestattet. Das Begrenzungsmittel **12** umfasst in dem gezeigten Beispiel ein Blockiermittel **14** sowie ein Bewegungsmittel **15**. Das Blockiermittel **14** ist hier von einer Anschlagplatte gebildet, die eine im Wesentlichen kreisförmige Form aufweist. Das Blockiermittel **14** ist unmittelbar an dem Festabschnitt **19** des zugehörigen Raupenlaufwerks **2** angeordnet und somit mittelbar verdrehfest mit dem Fahrzeug **1** gekoppelt. Es umfasst zwei Anschläge **16**, die sich ausgehend von einem äußeren Rand **17** des Blockiermittels **14** radial zur Schwenkachse **11** nach außen erstrecken. Dies ergibt sich besonders gut anhand der Darstellungen gemäß den **Figuren 3** **und** **4****.**

Die Anschläge **16** sind derart an dem Blockiermittel **14** angeordnet, dass sie bezogen auf die Schwenkachse **11** einen Schwenkwinkelbereich **13** begrenzen. Dieser Schwenkwinkelbereich **13** ist gegenüber einer Nulllage des zugehörigen Raupenlaufwerks **2** derart ausgebildet, dass das Raupenlaufwerk **2** sowohl im Uhrzeigersinn als auch entgegen dem Uhrzeigersinn nicht über einen Grenzschwenkwinkel hinaus relativ zu dem Fahrzeug **1** verschwenken kann. In dem gezeigten Beispiel ist das Blockiermittel **14** derart ausgebildet, dass sich der Schwenkwinkelbereich **13** um ±12,5° relativ zu einer in **Figur 1** dargestellten Nulllage des Raupenlaufwerks **2** erstreckt.

Das Bewegungsmittel **15** ist anders als das Blockiermittel **14** nicht verdrehfest mit dem Fahrzeug **1**, sondern mit dem zugehörigen Raupenlaufwerk **2** verbunden. Das heißt, dass es sich unabhängig von einer Verschwenkung des jeweiligen Raupenlaufwerks **2** gegenüber dem Fahrzeug **1** durchgehend an derselben Stelle an dem Raupenlaufwerk **2** befindet. Das Bewegungsmittel **15** ist mit dem übrigen Raupenlaufwerk **2** in Kraft übertragender Weise verbunden. Es ist derart relativ zu dem Blockiermittel **14** angeordnet, dass es in einen Bewegungsbereich **18** des Blockiermittels **14** hineinragt. Dieser Bewegungsbereich **18** ist nach oben und unten von den Anschlägen **16** und zu einer Seite hin von dem äußeren Rand **17** der Anschlagplatte begrenzt. Das Bewegungsmittel **15** ist hier in Form eines Zylinders ausgebildet, der an seinem einen Ende frei und mit seinem gegenüberliegenden Ende fest mit dem Raupenlaufwerk **2** verbunden ist.

Das Bewegungsmittel **15** und das Blockiermittel **14** sind derart relativ zueinander positioniert, dass das Bewegungsmittel **15** im Zuge einer Verschwenkung des zugehörigen Raupenlaufwerks **2** um die Schwenkachse **11** mit dem Blockiermittel **14** bzw. dessen Anschlägen **16** eingreifen kann. Kommt es zu einem Anschlag des Bewegungsmittels **15** an einem der Anschläge **16** ist eine darüber hinausgehende Verschwenkung des Raupenlaufwerks **2** gegenüber dem Fahrzeug **1** blockiert. Mit anderen Worten ist mittels des Begrenzungsmittels **12** insgesamt sichergestellt, dass das Raupenlaufwerk **2** nicht über den Schwenkwinkelbereich **13** hinaus relativ zu dem Fahrzeug **1** verschwenkt werden kann.

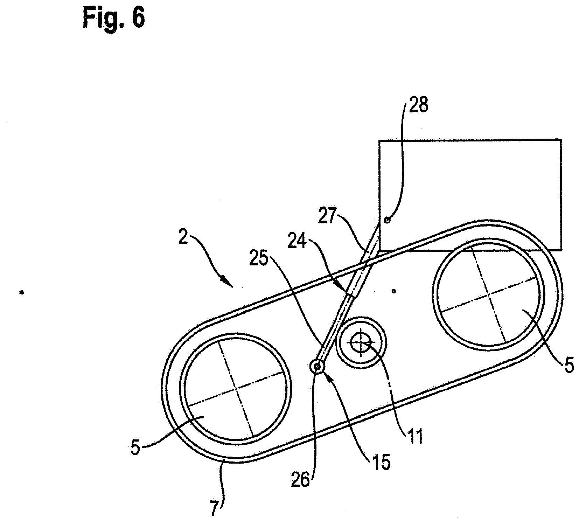

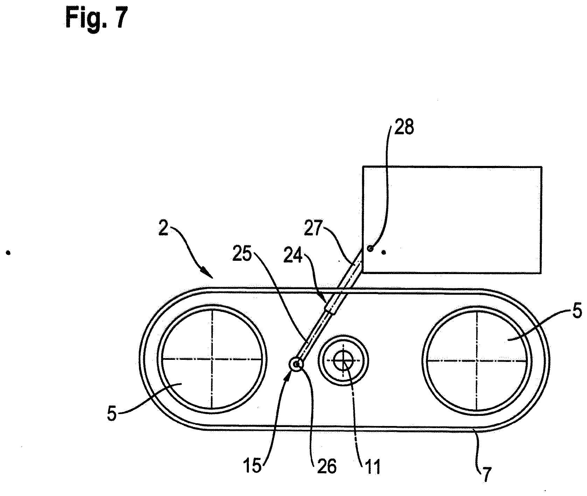

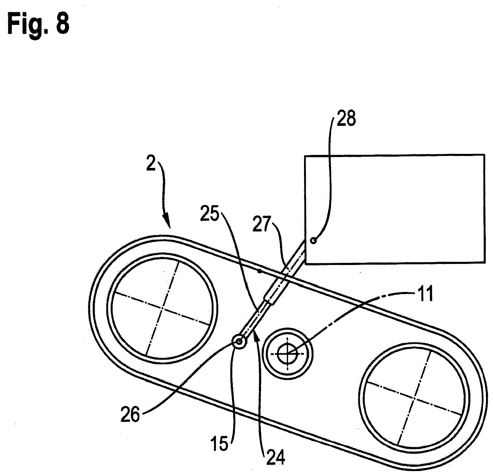

Zwecks einer Dämpfung eines Anschlags des Bewegungsmittels **15** an dem Blockiermittel **14** kann das erfindungsgemäße Raupenlaufwerk **2** mit mindestens einem Dämpfungselement **24** zusammenwirken. Ein solches ist in den **Figuren 6 bis 8** schematisch an einem gleichfalls schematisch dargestellten Raupenlaufwerk **2** dargestellt. Das Dämpfungselement **24,** das hier in Form einer Kolben-Zylinder-Einheit ausgebildet ist, ist mit seinem Kolben **25** an einem festen Drehpunkt **26** an dem Raupenlaufwerk **2** und mit seinem Zylinder **27** ortsfest an einer Befestigungsstelle **28** des zugehörigen Fahrzeugs **1** befestigt. Der Kolben **25** kann insbesondere über Drosselbohrungen verfügen, der ein gedrosseltes Überströmen eines Arbeitsfluids von einem ersten Arbeitsraum in einen zweiten Arbeitsraum und umgekehrt innerhalb des Dämpfungselements **24** ermöglicht, sodass eine ansonsten schlagartige Verschwenkung des Raupenlaufwerks **2** um dessen Schwenkachse **11** dämpfbar ist. Die Drosselwirkung - und somit die Dämpfungswirkung - tritt ungeachtet der einer jeweiligen Lage des Dämpfungselements **24** grundsätzlich ein, sobald sich der Koben **25** und der Zylinder **27** des Dämpfungselements **24** relativ zueinander bewegen. Die **Figuren 6 bis 8** zeigen drei exemplarische Lagen des Raupenlaufwerks **2**, wobei die **Figuren 6** **und** **8** entgegengesetzt extremale Schwenklagen des Raupenlaufwerks **2** veranschaulichen, in denen das Begrenzungsmittel **15** mit dem Blockiermittel **14** eingreift, und **Figur 7** die Nulllage des Raupenlaufwerks **2** zeigt.

Mittels des Dämpfungselements **24** ist vermieden, dass ein schlagartiges Anschlagen des Bewegungsmittels **15** an dem Blockiermittel **14** auftritt und zu Beschädigungen führt. Alternativ zu dem gezeigten Dämpfungselement **24** sind selbstverständlich auch andere Varianten vorstellbar, die beispielsweise auf das Blockiermittel **14** wirken können, zum Beispiel in Form einer Drehfeder.

### Bezugszeichenliste

- 1: Fahrzeug
- 2: Raupenlaufwerk
- 3: Ende der Vorderachse
- 4: Vorderachse
- 5: Hauptrad
- 6: Hilfsrad
- 7: Laufgurt
- 8: unterer Abschnitt des Laufgurts
- 9: Untergrund
- 10: Anlenkstelle
- 11: Schwenkachse
- 12: Begrenzungsmittel
- 13: Schwenkwinkelbereich
- 14: Blockiermittel
- 15: Bewegungsmittel
- 16: Anschlag
- 17: Rand der Anschlagplatte
- 18: Bewegungsbereich
- 19: Festabschnitt
- 20: Erntegut
- 21: Hinterrad
- 22: Erhebung
- 23: Gelenkwelle
- 24: Dämpfungselement
- 25: Kolben
- 26: Drehpunkt
- 27: Zylinder
- 28: Befestigungsstelle

## Patentansprüche

1. Landwirtschaftliches Fahrzeug (1), insbesondere ein Feldhäcksler, mit zwei beidseitig des Fahrzeugs (1) angeordneten Raupenlaufwerken (2), die an gegenüberliegenden Enden (3) einer Vorderachse (4) des Fahrzeugs (1) jeweils mit dem Fahrzeug (1) zusammenwirken, die Raupenlaufwerke (2) jeweils umfassend
- mindestens zwei einander gegenüberliegende Haupträder (5),
- mindestens ein zwischen den Haupträdern (5) angeordnetes Hilfsrad (6) sowie
- mindestens einen die Haupträder (5) umspannenden Laufgurt (7),
wobei das Hilfsrad (6) derart mit einem unteren Abschnitt (8) des Laufgurts (7) zusammenwirkt, dass ein Abheben des Laufgurts (7) von einem jeweiligen Untergrund (9) im Bereich zwischen den Haupträdern (5) zumindest im Wesentlichen vermeidbar ist,
wobei die Raupenlaufwerke (2) jeweils an einer Anlenkstelle (10) der Vorderachse (4) an selbige angelenkt sind, sodass die Raupenlaufwerke (2) jeweils um eine zu der Vorderachse (4) parallele Schwenkachse (11) relativ zu dem Fahrzeug (1) verschwenkbar sind,
**gekennzeichnet durch**
mindestens ein Begrenzungsmittel (12), mittels dem ein Schwenkwinkelbereich (13) begrenzbar oder begrenzt ist, innerhalb dem ein dem Begrenzungsmittel (12) zugeordnetes Raupenlaufwerk (2) um die Schwenkachse (11) relativ zu dem übrigen Fahrzeug (1) verschwenkbar ist,
wobei das Begrenzungsmittel (12) mindestens ein Dämpfungselement (24) umfasst, mittels dem eine Anschlagkraft, die im Moment eines Anschlags miteinander zusammenwirkender Komponenten des Begrenzungsmittels (12) auftritt, dämpfbar ist.

2. Fahrzeug (1) nach Anspruch 1, **dadurch gekennzeichnet, dass** das Begrenzungsmittel (12) mindestens ein verdrehfest zumindest mittelbar an der Vorderachse (4) des Fahrzeugs (1) angeschlossenes Blockiermittel (14) sowie mindestens ein radial von der Schwenkachse (11) beabstandetes, fest an dem Raupenlaufwerk (2) angeordnetes Bewegungsmittel (15) umfasst, wobei das Bewegungsmittel (15) und das Blockiermittel (14) derart zusammenwirken, dass eine Bewegung des Bewegungsmittels (15) relativ zu dem Blockiermittel (14) über den Schwenkwinkelbereich (13) hinaus mittels des Blockiermittels (14) blockierbar oder blockiert ist.

3. Fahrzeug (1) nach Anspruch 2, **dadurch gekennzeichnet, dass** das Blockiermittel (14) mindestens zwei einander gegenüberliegende Anschläge (16) umfasst, die gemeinsam den Schwenkwinkelbereich (13) begrenzen, wobei das Bewegungsmittel (15) an den Anschlägen (16) anschlagen kann.

4. Fahrzeug (1) nach Anspruch 3, **dadurch gekennzeichnet, dass** das Blockiermittel (14) von einer Anschlagplatte gebildet ist, deren Plattenebene senkrecht zu der Schwenkachse (11) orientiert ist, wobei vorzugsweise sich der Schwenkwinkelbereich (13) zwischen zwei - bezogen auf die Schwenkachse - (11) radial erstreckenden Anschlägen (16) erstreckt.

5. Fahrzeug (1) nach einem der Ansprüche 2 bis 4, **dadurch gekennzeichnet, dass** das Bewegungsmittel (15) einen Zapfen umfasst, insbesondere in Form eines Zylinders, der in den von dem Blockiermittel (14) begrenzten Schwenkwinkelbereich (13) hineinragt, sodass der Zapfen im Zuge der Verschwenkung des zugehörigen Raupenlaufwerks (2) relativ zu dem übrigen Fahrzeug (1) um die Schwenkachse (11) sowie bei Erreichen eines Endes des Schwenkwinkelbereichs (13) an dem Blockiermittel (14) anschlägt.

6. Fahrzeug (1) nach einem der Ansprüche 2 bis 5 und 6, **dadurch gekennzeichnet, dass** das Dämpfungselement (24) an dem Begrenzungsmittel (12), vorzugsweise an dem Bewegungsmittel (15), ausgebildet ist, wobei das Dämpfungselement (24) vorzugsweise von einer Kolben-Zylinder-Einheit oder einer Feder gebildet ist.

7. Raupenlaufwerk (2) für ein landwirtschaftliches Fahrzeug (1), insbesondere für einen Feldhäcksler, umfassend
- mindestens zwei einander gegenüberliegende Haupträder (5),
- mindestens ein zwischen den Haupträdern (5) liegendes Hilfsrad (6) sowie
- mindestens einen die Haupträder (5) umspannenden Laufgurt (7),
wobei das Hilfsrad (6) derart mit einem unteren Abschnitt (8) des Laufgurts (7) zusammenwirkt, dass ein Abheben des Laufgurts (7) von einem jeweiligen Untergrund (9) im Bereich zwischen den Haupträdern (5) zumindest im Wesentlichen vermeidbar ist,
wobei das Raupenlaufwerk (2) mindestens einen Festabschnitt (19) aufweist, relativ zu dem das übrige Raupenlaufwerk (2) um eine dem Festabschnitt (19) zugeordnete Schwenkachse (11) verschwenkbar ist,
**gekennzeichnet durch**
mindestens ein Begrenzungsmittel (12), mittels dem ein Schwenkwinkelbereich (13), innerhalb dem das Raupenlaufwerk um die Schwenkachse (11) relativ zu dem Festabschnitt (19) verschwenkbar ist, begrenzbar oder begrenzt ist,
wobei das Begrenzungsmittel (12) mindestens ein Dämpfungselement (24) umfasst, mittels dem eine Anschlagkraft, die im Moment eines Anschlags miteinander zusammenwirkender Komponenten des Begrenzungsmittels (12) auftritt, dämpfbar ist, wobei das Dämpfungselement (24) vorzugsweise mit dem Begrenzungsmittel (12), weiter vorzugsweise mit einem Bewegungsmittel (15) desselben, zusammenwirkt.

8. Raupenlaufwerk (2) nach Anspruch 8, **dadurch gekennzeichnet, dass** das Begrenzungsmittel (12) mindestens ein verdrehfest an dem Festabschnitt (19) angeschlossenes Blockiermittel (14) sowie mindestens ein radial von der Schwenkachse (11) beabstandetes, fest an dem übrigen Raupenlaufwerk (2) angeordnetes Bewegungsmittel (15) umfasst, wobei das Bewegungsmittel (15) und das Blockiermittel (14) derart zusammenwirken, dass eine Bewegung des Bewegungsmittels (15) relativ zu dem Blockiermittel (14) über den Schwenkwinkelbereich (13) hinaus mittels des Blockiermittels (14) blockierbar ist.

## Claims

1. An agricultural vehicle (1), in particular a forage harvester, with two crawler drives (2) disposed on either side of the vehicle (1) which respectively cooperate with the vehicle (1) on opposite ends (3) of a front axle (4) of the vehicle (1), the crawler drives (2) respectively comprising:
- at least two main wheels (5) which are opposite each other,
- at least one auxiliary wheel (6) disposed between the main wheels (5), as well as
- at least one crawler belt (7) encompassing the main wheels (5),
wherein the auxiliary wheel (6) cooperates with a lower section (8) of the crawler belt (7) in a manner such that lifting of the crawler belt (7) from a respective surface (9) in the region between the main wheels (5) is at least substantially preventable,
wherein the crawler drives (2) are respectively articulated on the front axle (4) at an articulation position (10) thereon so that the crawler drives (2) are respectively pivotable relative to the vehicle (1) about a pivot axis (11) which is parallel to the front axle (4),
**characterized by**
at least one limiting means (12), by means of which a pivot angle range (13) can be delimited or is delimited, within which a crawler drive (2) associated with the limiting means (12) is pivotable about the pivot axis (11) relative to the rest of the vehicle (1), wherein the limiting means (12) comprises at least one damping element (24) by means of which a force of impact which arises at the moment of impact on mutually cooperating components of the limiting means (12) can be damped.

2. The vehicle (1) according to claim 1, **characterized in that** the limiting means (12) comprises at least one obstruction means (14) which is attached in a torsion-proof manner at least indirectly to the front axis (4) of the vehicle (1), as well as at least one moving means (15) which is firmly attached to the crawler drive (2) and radially separated from the pivot axis (11), wherein the moving means (15) and the obstruction means (14) cooperate in a manner such that a movement of the active means (15) relative to the obstruction means (14) beyond the pivot angle range (13) can be obstructed or is obstructed by the obstruction means (14).

3. The vehicle (1) according to claim 2, **characterized in that** the obstruction means (14) comprises at least two mutually opposing abutments (16) which together delimit the pivot angle range (13), wherein the moving means (15) can impinge against the abutments (16).

4. The vehicle (1) according to claim 3, **characterized in that** the obstruction means (14) is formed by an abutment plate the plate plane of which is orientated perpendicular to the pivot axis (11), wherein preferably, the pivot angle range (13) extends between two abutments (16) which extend radially with respect to the pivot axis (11).

5. The vehicle (1) according to one of claims 2 to 4, **characterized in that** the moving means (15) comprises a pin, in particular in the form of a cylinder, which protrudes into the pivot angle range (13) delimited by the obstruction means (14), so that during the course of pivoting of the associated crawler drive (2) relative to the rest of the vehicle (1) about the pivot axis (11) as well as upon reaching one end of the pivot angle range (13), the pin impinges against the obstruction means (14).

6. The vehicle (1) according to one of claims 2 to 5 and 6, **characterized in that** the damping element (24) is formed on the limiting means (12), preferably on the moving means (15), wherein the damping element (24) is preferably formed by a piston-cylinder unit or a spring.

7. A crawler drive (2) for an agricultural vehicle (1), in particular for a forage harvester, comprising:
- at least two main wheels (5) which are opposite each other,
- at least one auxiliary wheel (6) located between the main wheels (5), as well as
- at least one crawler belt (7) encompassing the main wheels (5),
wherein the auxiliary wheel (6) cooperates with a lower section (8) of the crawler belt (7) in a manner such that lifting of the crawler belt (7) from a respective surface (9) in the region between the main wheels (5) is at least substantially preventable,
wherein the crawler drive (2) has at least one fixed section (19) relative to which the rest of the crawler drive (2) can be pivoted about a pivot axis (11) which is associated with the fixed section (19),
**characterized by**
at least one limiting means (12), by means of which a pivot angle range (13) can be delimited or is delimited, within which the crawler drive is pivotable about the pivot axis (11) relative to the fixed section (19),
wherein the limiting means (12) comprises at least one damping element (24) by means of which an impact force which arises at the moment of impact on mutually cooperating components of the limiting means (12) can be damped, wherein the damping element (24) preferably cooperates with the limiting means (12), more preferably with an moving means (15) thereof.

8. The crawler drive (2) as claimed in claim 8, **characterized in that** the limiting means (12) comprises at least one obstruction means (14) which is attached to the fixed section (19) in a torsion-proof manner as well as at least one moving means (15) which is firmly attached to the rest of the crawler drive (2) and radially separated from the pivot axis (11), wherein the moving means (15) and the obstruction means (14) cooperate in a manner such that a movement of the moving means (15) relative to the obstruction means (14) beyond the pivot angle range (13) can be obstructed by means of the obstruction means (14).

## Revendications

1. Véhicule agricole (1), en particulier une ensileuse, comprenant deux trains de roulement à chenilles (2) qui sont disposés de part et d'autre du véhicule (1) et qui coopèrent respectivement avec le véhicule (1) à des extrémités opposées (3) d'un essieu avant (4) du véhicule (1), les trains de roulement à chenilles (2) incluant respectivement
- au moins deux roues principales opposées l'une à l'autre (5),
- au moins une roue auxiliaire (6) disposée entre les roues principales (5) ainsi que
- au moins une bande de roulement (7) entourant les roues principales (5),
la roue auxiliaire (6) coopérant avec une portion inférieure (8) de la bande de roulement (7), de façon qu'un soulèvement de la bande de roulement (7) par rapport à un support respectif (9) soit au moins sensiblement évitable dans la zone entre les roues principales (5),
les trains de roulement à chenilles (2) étant articulés respectivement sur l'essieu avant (4) en un point d'articulation (10) de celui-ci, de sorte que les trains de roulement à chenilles (2) peuvent pivoter respectivement par rapport au véhicule (1) autour d'un axe de pivotement (11) parallèle à l'essieu avant (4),
**caractérisé par**
au moins un moyen de limitation (12) à l'aide duquel une plage angulaire de pivotement (13) est limitable ou limitée, à l'intérieur de laquelle un train de roulement à chenilles (2) associé à un moyen de limitation (12) peut pivoter autour de l'axe de pivotement (11) par rapport au reste du véhicule (1),
le moyen de limitation (12) incluant au moins un élément amortisseur (24) à l'aide duquel une force de butée, qui survient lors de la venue en butée de composants coopérants mutuellement du moyen de limitation (12), peut être amortie.

2. Véhicule (1) selon la revendication 1, **caractérisé en ce que** le moyen de limitation (12) inclut au moins un moyen de blocage (14) relié, de manière solidaire en rotation, au moins indirectement à l'essieu avant (4) du véhicule (1) ainsi qu'au moins un moyen de déplacement (15) distant radialement de l'axe de pivotement (11) et monté fixe sur le train de roulement à chenilles (2), le moyen de déplacement (15) et le moyen de blocage (14) coopérant de façon qu'un déplacement du moyen de déplacement (15) par rapport au moyen de blocage (14) au-delà de la plage angulaire de pivotement (13) soit blocable ou bloqué à l'aide du moyen de blocage (14).

3. Véhicule (1) selon la revendication 2, **caractérisé en ce que** le moyen de blocage (14) inclut au moins deux butées opposées l'une à l'autre (16) qui limitent conjointement la plage angulaire de pivotement (13), le moyen de déplacement (15) pouvant venir en butée contre les butées (16).

4. Véhicule (1) selon la revendication 3, **caractérisé en ce que** le moyen de blocage (14) est formée par une plaque de butée dont le plan de plaque est orienté perpendiculairement à l'axe de pivotement (11), la plage angulaire de pivotement (13) s'étendant de préférence entre deux butées (16) s'étendant radialement - par rapport à l'axe de pivotement (11).

5. Véhicule (1) selon une des revendications 2 à 4, **caractérisé en ce que** le moyen de déplacement (15) inclut un tourillon, en particulier en forme de cylindre, qui pénètre dans la plage angulaire de pivotement (13) limitée par le moyen de blocage (14), de sorte que, au cours du pivotement du train de roulement à chenilles associé (2), le tourillon pivote par rapport au reste du véhicule (11) autour de l'axe de pivotement (11) ainsi que, en atteignant une extrémité de la plage angulaire de pivotement (13), vient en butée contre le moyen de blocage (14).

6. Véhicule (1) selon une des revendications 2 à 5 et 6, **caractérisé en ce que** l'élément amortisseur (24) est réalisé sur le moyen de limitation (12), de préférence sur le moyen de déplacement (15), l'élément amortisseur (24) étant formé de préférence par une unité piston-cylindre ou par un ressort.

7. Train de roulement à chenilles (2) pour un véhicule agricole (1), en particulier pour une ensileuse, incluant
- au moins deux roues principales opposées l'une à l'autre (5),
- au moins une roue auxiliaire (6) disposée entre les roues principales (5) ainsi que
- au moins une bande de roulement (7) entourant les roues principales (5),
la roue auxiliaire (6) coopérant avec une portion inférieure (8) de la bande de roulement (7), de façon qu'un soulèvement de la bande de roulement (7) par rapport à un support respectif (9) soit au moins sensiblement évitable dans la zone entre les roues principales (5),
le train de roulement à chenilles (2) comportant au moins une portion fixe (19) par rapport à laquelle le reste du train de roulement à chenilles (2) peut pivoter autour d'un axe de pivotement (11) associé à la portion fixe (19),
**caractérisé par**
au moins un moyen de limitation (12) à l'aide duquel une plage angulaire de pivotement (13), à l'intérieur de laquelle le train de roulement à chenilles peut pivoter autour de l'axe de pivotement (11) par rapport à la portion fixe (19), est limitable ou limitée,
le moyen de limitation (12) incluant au moins un élément amortisseur (24) à l'aide duquel une force de butée, qui survient lors de la venue en butée de composants coopérants mutuellement du moyen de limitation (12), peut être amortie, l'élément amortisseur (24) coopérant de préférence avec le moyen de limitation (12), plus préférablement avec un moyen de déplacement (15) de celui-ci.

8. Train de roulement à chenilles (2) selon la revendication 8, **caractérisé en ce que** le moyen de limitation (12) inclut au moins un moyen de blocage (14) relié, de manière solidaire en rotation, à la portion fixe (19) ainsi qu'au moins un moyen de déplacement (15) distant radialement de l'axe de pivotement (11) et monté fixe sur le train de roulement à chenilles (2), le moyen de déplacement (15) et le moyen de blocage (14) coopérant de façon qu'un déplacement du moyen de déplacement (15) par rapport au moyen de blocage (14) au-delà de la plage angulaire de pivotement (13) soit blocable à l'aide du moyen de blocage (14) .
